# EUROPÄISCHE PATENTSCHRIFT

(11) **EP 3 762 623 B1**
(45) Veröffentlichungstag und Bekanntmachung des Hinweises auf die Patenterteilung: **05.04.2023**
(21) Anmeldenummer: 19705773.0
(22) Anmeldetag: 26.02.2019
(51) Int. Cl.: F16B 13/06

(54) **SPREIZANKER MIT UNTERSCHIEDLICHEN EXPANSIONSWINKELN**
EXPANSION ANCHOR COMPRISING DIFFERENT EXPANSION ANGLES
ANCRAGE EXPANSIBLE AYANT DIFFÉRENTS ANGLES D'EXPANSION

(30) Priorität: 05.03.2018 EP 18159867
(43) Veröffentlichungstag der Anmeldung: 13.01.2021
(73) Patentinhaber: Hilti Aktiengesellschaft, 9494 Schaan (LI)
(72) Erfinder: HAEUSSLER, Karl, 7222 Lunden (CH); SHIMAHARA, Hideki, 9472 Grabs (CH); FRENSEMEIER, Mareike, 9470 Buchs (CH); LI, Yijun, 9470 Buchs (CH); YAN, Wentao, 9470 Buchs SG (CH); GUEVARA ARRIOLA, Arturo, Irving, TX 75063 (US)
(74) Vertreter: Hilti Aktiengesellschaft Corporate Intellectual Property
(86) Internationale Anmeldenummer: PCT/EP2019/054706
(87) Internationale Veröffentlichungsnummer: WO 2019/170470

(56) Entgegenhaltungen:
- EP-A2- 0 019 782
- CH-A5- 688 061
- DE-A1- 2 701 510
- JP-A- H09 209 457
- JP-A- 2007 154 914

## Beschreibung

Die Erfindung betrifft einen Spreizanker gemäss dem Oberbegriff des Anspruchs 1. Ein solcher Spreizanker ist ausgestattet mit einem Ankerbolzen und einer Spreizhülse, welche den Ankerbolzen umgibt, wobei die Spreizhülse eine Spreizzunge und eine Ankerzunge aufweist, und wobei der Ankerbolzen eine nach hinten weisende Spreizschräge zum radialen Verdrängen der Spreizzunge und eine nach hinten weisende Ankerschräge zum radialen Verdrängen der Ankerzunge aufweist, wobei die Ankerschräge an einer im Ankerbolzen angeordneten Mulde gebildet ist.

Die WO15067578 A1 zeigt einen Spreizanker, in dessen Spreizkörper nach vorne hin geschlossene Furchen eingebracht sind, welche die Kontaktfläche zwischen dem Spreizkörper und der Spreizhülse verringern.

Die EP2848825 A1 beschreibt einen Spreizanker, dessen Spreizhülse nach innen vorstehende, axial verlaufende Stege aufweist. Beim Spreizen der Spreizhülse gelangen die Stege bereichsweise in den Spreizbereich des Spreizankers und werden vom Spreizbereich radial nach aussen gedrängt wird.

Aus der DE2256822 A1 gehen Spreizanker hervor, die eine Verdrehsicherung zwischen Spreizhülse und Ankerbolzen aufweisen. Die Verdrehsicherung kann beispielsweise durch eine randseitige Abkantung der Spreizhülse gebildet sein, die in eine Nut im Ankerbolzen eingreift.

Die WO12126700 A1 beschreibt einen Spreizanker, dessen Spreizkörper in einem Endbereich axial verlaufende Stege aufweist. Die EP2309138 A2 beschreibt einen Spreizanker, dessen Spreizkörper im Querschnitt Ecken aufweist.

Die DE 2701510 A1 beschreibt einen Anker, der an seiner Hülse Spreizzungen aufweist, die beim Einziehen des Spreizkörpers von Nasen untergriffen werden, und die für eine zusätzliche Verankerung des Ankers sorgen können, insbesondere beim Festlegen in weicheren Baustoffen.

Die JP 2007154914 A zeigt einen Anker mit Verriegelungsmitteln an der Hülse. Die Verriegelungsmittel weisen Zungen auf, die durch Ausschnitte der Hülse gebildet sind, und die zum rückwärtigen Ende hin ausdehnbar sind.

Die JP H09209457 A beschreibt einen Anker, bei dem der Spreizkörper zwei hintereinander angeordnete Zonen unterschiedlicher Neigung aufweist, und bei dem die Spreizhülse zwei hintereinander angeordnete Zonen aufweist.

Die CH 688061 A5 zeigt einen Anker mit unsymmetrischem Spreizkörper, wobei die Hülse unterschiedlich lange Spreizschenkel aufweist.

EP 0019782 A2 zeigt einen Anker mit einer Drehsperr-Zunge, die als erstes nach aussen gedrückt wird.

Aufgabe der Erfindung ist es, einen Spreizanker anzugeben, der bei besonders geringem Herstellungsaufwand besonders leistungsfähig ist und besonders vielseitig einsetzbar ist.

Die Aufgabe wird erfindungsgemäss durch einen Spreizanker mit den Merkmalen des Anspruchs 1 gelöst. Bevorzugte Ausführungsformen sind in den abhängigen Ansprüchen angegeben.

Ein erfindungsgemässer Spreizanker ist dadurch gekennzeichnet, dass die Ankerschräge zumindest bereichsweise steiler verläuft als die Spreizschräge, und dass bei axialer Verschiebung der Spreizzunge zur Spreizschräge hin die Spreizzunge auf die Spreizschräge aufläuft bevor die Ankerzunge auf die Ankerschräge aufläuft.

Es ist vorgesehen, dass die Spreizhülse eine Spreizzunge und eine Ankerzunge aufweist, und dass der Ankerbolzen eine nach hinten weisende Spreizschräge zum radialen Verdrängen der Spreizzunge und eine nach hinten weisende Ankerschräge zum radialen Verdrängen der Ankerzunge aufweist, wobei die Ankerschräge zumindest bereichsweise steiler verläuft als die Spreizschräge.

Ein erster Grundgedanke der Erfindung kann darin gesehen werden, an der Spreizhülse unterschiedliche Zungen vorzusehen, die bei der Montage des Spreizankers jeweils mit unterschiedlichen Spreizwinkeln gespreizt werden.

Die Erfindung basiert auf der Erkenntnis, dass bei konventionellen Spreizankern das Wechselspiel zwischen äusserer Reibung - also der Reibung zwischen der Spreizhülse und der Bohrlochwand - und innerer Reibung - also der Reibung zwischen der Spreizhülse und dem Ankerbolzen - unter Umständen die Freiheit bei der Dimensionierung, insbesondere die Freiheit bei der Wahl von Spreizwinkeln, limitieren kann, was wiederum die Leistungsfähigkeit der Spreizanker limitieren kann. So sind beispielsweise in bestimmten Substratkonfigurationen, beispielsweise in gerissenem Beton, grosse Spreizwinkel erwünscht, insbesondere um ein effektives Nachspreizen bei Rissöffnung schon bei einem geringen Versatz des Ankerbolzens zu ermöglichen. Wird jedoch der Spreizwinkel vergrössert, so steigt die innere Reibung und kann unter Umständen grösser als die äussere Reibung werden. Der resultierende Spreizanker hätte dann eine Tendenz zum Auszug aus dem Bohrloch ohne hinreichende Verankerung der Spreizhülse in der Frühphase der Montage.

Hier setzt die Erfindung an und sieht unterschiedliche Zungen vor, denen unterschiedlich geneigte Schrägen zugeordnet sind. Insbesondere ist zumindest eine Spreizzunge mit zugeordneter Spreizschräge mit vergleichsweise flachem Winkel und zumindest eine Ankerzunge mit zugeordneter Ankerschräge mit vergleichsweise steilem Winkel vorgesehen. Beispielsweise kann die Spreizzunge die anfängliche Fixierung des Spreizankers im Substrat ermöglichen und die Ankerzunge mit grossem Winkel eine verstärkte Expansion nach Rissöffnung. Somit können also grosse Winkel zur Verankerung auch in gerissenem Beton zur Verfügung gestellt werden, ohne die innere Reibung in der Frühphase des Verankerungsprozesses übermässig zu erhöhen, also ohne eine Tendenz zu vorzeitigem Auszug zu bewirken. Dies erlaubt es, an der Ankerzunge Winkel vorzusehen, die über das übliche Mass hinausgehen. Die damit einhergehende stärkere Expansion kann zu einer besonders guten Verankerung der Hülse im Beton nach Rissöffnung führen. Aber auch in anderen Einsatzbereichen kann die erfindungsgemässe Integration unterschiedlich stark expandierender Zungen auf demselben Anker eine Leistungssteigerung bewirken, da durch die Unterschiede in den Expansionseigenschaften ein zusätzlicher konstruktiver Freiheitsgrad zur Verfügung gestellt wird, der es erlaubt, den Spreizanker besonders gut an die herrschenden Randbedingungen anzupassen. Dies ist erfindungsgemäss bei besonders geringem Herstellungsaufwand möglich, unter anderem weil die verschiedenen Zungen allesamt Teile der Spreizhülse sind.

Die Spreizhülse bildet vorzugsweise einen offenen Ring, also eine C-Form, in dem beziehungsweise in der der Ankerbolzen aufgenommen ist, was eine einfache Herstellung durch Wickeln einer Platine um den Ankerbolzen ermöglicht. Der Ankerbolzen kann die beiden Zungen mit seinen Schrägen radial verdrängen, wenn der Ankerbolzen relativ zur Spreizhülse axial nach hinten versetzt wird. Insbesondere dient die Spreizschräge zum radialen Verdrängen der Spreizzunge beim axialen Versetzen der Spreizschräge relativ zur Spreizzunge nach hinten und dient die Ankerschräge zum radialen Verdrängen der Ankerzunge beim axialen Versetzen der Ankerschräge relativ zur Ankerzunge nach hinten. Die Spreizschräge kann die Spreizzunge radial verdrängen, wenn der Ankerbolzen zusammen mit der Spreizschräge relativ zur Spreizzunge nach hinten versetzt wird, und die Ankerschräge kann die Ankerzunge radial verdrängen, wenn der Ankerbolzen zusammen mit der Ankerschräge relativ zur Ankerzunge nach hinten versetzt wird.

Die Spreizschräge ist insbesondere zumindest bereichsweise vor der Spreizzunge angeordnet. Die Ankerschräge ist insbesondere zumindest bereichsweise vor der Ankerzunge angeordnet. Vorzugsweise können die Spreizhülse und der Ankerbolzen koaxial angeordnet sein. Die beiden Schrägen weisen beide nach hinten, insbesondere bezogen auf die Längsachse des Ankerbolzens, was insbesondere beinhalten kann, dass der Ankerbolzen hinter den beiden Schrägen jeweils einen Freiraum aufweist, Insbesondere nähern sich sowohl die Spreizschräge als auch die Ankerschräge nach hinten hin an die Längsachse des Ankerbolzens an.

Soweit hier von der Axialrichtung, der Umfangsrichtung und der Radialrichtung die Rede ist, soll sich dies insbesondere auf die Längsachse des Ankerbolzens beziehen, welche insbesondere mit der Längsachse des Spreizankers zusammenfallen kann. Auch die verschiedenen Neigungswinkel sollen sich insbesondere auf die Längsachse des Ankerbolzens beziehen. Die Längsachse des Ankerbolzens verläuft insbesondere in Montagerichtung, also in der Richtung, in welche der Ankerbolzen bei bestimmungsgemässer Montage in ein Bohrloch eingeschoben wird. Die Richtungsangaben "vorne" und "hinten" beziehungsweise "rückwärtig" sollen hier einheitlich verwendet werden, dies insbesondere soweit diese Richtungsangaben im Zusammenhang mit dem Ankerbolzen und der Spreizhülse verwendet werden. Insbesondere sollen sich die Richtungsangaben auf die Axialrichtung beziehen.

Unter der zumindest bereichsweise "steileren" Anordnung der Ankerschräge verglichen mit der Spreizschräge soll insbesondere verstanden werden, dass die Ankerschräge zumindest bereichsweise einen grösseren spitzen Neigungswinkel zur Längsachse des Ankerbolzens aufweist als die Spreizschräge, dies gemessen insbesondere in einer die Längsachse des Ankerbolzens enthaltenden Radialebene. "Steiler" soll also insbesondere "bezogen auf die Längsachse steiler" beinhalten.

Insbesondere kann die Ankerschräge einen maximalen Neigungswinkel mit der Längsachse aufweisen, der im Bereich von 36° bis 70° liegt. Dies ermöglicht eine besonders gute Verankerung. Die Spreizschräge kann beispielsweise einen maximalen Neigungswinkel mit der Längsachse von etwa 30° aufweisen.

Der Ankerbolzen kann auch mehrteilig ausgeführt sein und beispielsweise eine Ankerstange und einen mit der Ankerstange verschraubten Spreizkörper aufweisen, an dem insbesondere zumindest die Spreizschräge angeordnet ist. Besonders bevorzugt ist es aber, dass der Ankerbolzen einstückig ausgebildet ist. Vorzugsweise bestehen die Spreizhülse und/oder der Ankerbolzen, insbesondere sein Spreizkörper, zumindest bereichsweise aus einem Metallmaterial. Insbesondere sind die Spreizschräge und die Ankerschräge zugfest am Ankerbolzen angeordnet, so dass nach hinten gerichtete Zugkräfte über diese Schrägen vom Ankerbolzen an die Zungen übertragen werden können.

In einem rückwärtigen Bereich des Ankerbolzens kann der Ankerbolzen eine Lastangriffsstruktur aufweisen. Die Lastangriffsstruktur dient zum Einleiten von Zugkräften in den Ankerbolzen. Die Lastangriffsstruktur kann beispielsweise ein Aussengewinde oder ein Innengewinde sein. In einer anderen Ausgestaltung kann die Lastangriffsstruktur auch ein Kopf sein, der ein Querschnittsmaximum bildet.

Soweit nicht anders angegeben sollen die hier beschriebenen Merkmale insbesondere für einen nicht-montierten Spreizanker, also einen Spreizanker vor der Montage, gelten, und/oder für einen Zustand, in dem die Zungen noch nicht von den korrespondierenden Schrägen gespreizt sind und/oder für einen Zustand, in dem die Spreizzunge zumindest bereichsweise axial nach hinten versetzt zur Spreizschräge angeordnet ist und/oder in dem die Ankerzunge zumindest bereichsweise axial nach hinten versetzt zur Ankerschräge angeordnet ist.

Erfindungsgemäss ist vorgesehen, dass bei axialer Verschiebung der Spreizzunge zur Spreizschräge hin die Spreizzunge auf die Spreizschräge aufläuft bevor die Ankerzunge auf die Ankerschräge aufläuft. Mit anderen Worten ist der Wirkabstand der Spreizzunge von der Spreizschräge kleiner als der Wirkabstand der Ankerzunge von der Ankerschräge, so dass die Spreizzunge vor der Ankerzunge vom Ankerbolzen aktiviert wird, das heisst radial verdrängt wird. Hierdurch kann die innere Reibung zu Beginn des Montagevorgangs besonders klein gehalten werden, was einem unerwünschten frühen Ausziehen des Spreizankers besonders effizient entgegenwirken kann.

Vorzugsweise deckt die Ankerschräge das freie Ende der Ankerzunge, in Umfangsrichtung des Ankerbolzens betrachtet, komplett ab. Mit anderen Worten ist der Winkelbereich, den die Ankerschräge um die Längsachse des Ankerbolzens überspannt, gleich gross oder grösser als der Winkelbereich, den das freie Ende der Ankerzunge um die Längsachse des Ankerbolzens überspannt, und der Winkelbereich, den das freie Ende der Ankerzunge um die Längsachse des Ankerbolzens überspannt, liegt innerhalb des Winkelbereichs, den die Ankerschräge um die Längsachse des Ankerbolzens überspannt. Hierdurch kann die Ankerzunge besonders wirkungsvoll aktiviert werden.

Erfindungsgemäss ist die Ankerschräge an einer im Ankerbolzen angeordneten Mulde gebildet. Diese Mulde erstreckt sich radial in den Ankerbolzen hinein. Eine die Mulde begrenzende Wand, insbesondere eine die Mulde vorderseitig begrenzende Wand, kann die Ankerschräge bilden. Diese Ausgestaltung erlaubt eine besonders einfache Herstellung eines erfindungsgemässen Spreizankers. Die Mulde kann die Ankerzunge, insbesondere vor der Aktivierung der Ankerzunge, zumindest bereichsweise aufnehmen, insbesondere in einer radial zur Längsachse des Ankerbolzens hin versetzten Position. Damit können unerwünschte Wechselwirkungen der Ankerzunge, insbesondere mit dem umgebenden Substrat, besonders einfach vermieden werden, so dass die konstruktive Freiheit und somit das potenzielle Anwendungsfeld noch grösser sein können. Die Mulde kann beispielsweise im Halsbereich oder im Spreizkörper des Ankerbolzens angeordnet sein.

Die Spreizzunge und die Ankerzunge können in dieselbe Richtung zeigen, insbesondere entweder beide nach vorne oder beide nach hinten. Dies soll insbesondere beinhalten, dass entweder das freie Ende der Spreizzunge vorne an der Spreizzunge und das freie Ende der Ankerzunge vorne an der Ankerzunge angeordnet ist, oder das freie Ende der Spreizzunge hinten an der Spreizzunge und das freie Ende der Ankerzunge hinten an der Ankerzunge angeordnet ist. Insbesondere kann somit die Biegerichtung der beiden Zungen beim radialen Verdrängen dieselbe sein. Dies kann unter anderem im Hinblick auf den Kraftfluss vorteilhaft sein und/oder den Herstellungsaufwand weiter verringern.

Besonders bevorzugt ist es, dass die Spreizzunge und die Ankerzunge beide nach vorne zeigen, was insbesondere beinhalten kann, dass das freie Ende der Spreizzunge vorne an der Spreizzunge und das freie Ende der Ankerzunge vorne an der Ankerzunge angeordnet ist. Insbesondere zeigt die Spreizzunge zur Spreizschräge und die Ankerzunge zur Ankerschräge. Dies kann im Hinblick auf das Spreizverhalten vorteilhaft sein.

Vorzugsweise stehen sowohl die Spreizzunge als auch die Ankerzunge vorne an der Spreizhülse vor. Insbesondere bilden das freie Ende der Spreizzunge und das freie Ende der Ankerzunge zumindest einen Abschnitt der vorderen Stirnseite der Spreizhülse. Bei einer solchen Ausgestaltung kann der Herstellungsaufwand besonders gering sein, insbesondere weil sowohl die Spreizzunge als auch die Ankerzunge durch Schlitze gebildet werden können, welche sich von der Stirnseite der Spreizhülse axial nach hinten in die Spreizhülse erstrecken. Darüber hinaus kann bei einer vorderseitigen Anordnung sowohl der Spreizzunge als auch der Ankerzunge eine besonders tiefe Lasteinleitung in das Bohrloch ermöglicht werden, was im Hinblick auf die Lastwerte vorteilhaft sein kann. Insbesondere kann eine Ausgestaltung vorgesehen sein, bei der die Spreizzunge und die Ankerzunge in Umfangsrichtung um die Längsachse nebeneinander angeordnet sind.

Die Spreizzunge und die Ankerzunge können mit ihren freien Enden auf derselben axialen Höhe enden, das heisst die freien Enden der beiden Zungen können axial nebeneinanderliegen. Dies kann herstellungstechnische Vorteile haben. Besonders bevorzugt kann es aber sein, dass die Spreizzunge und die Ankerzunge unterschiedlich weit nach vorne vorstehen. Insbesondere kann die Ankerzunge weiter nach vorne reichen als die Spreizzunge. Hierdurch kann das Verhalten des Spreizankers in konstruktiv besonders einfacher Weise noch besser an seine Umgebung angepasst werden.

Eine andere zweckmässige Ausgestaltung der Erfindung sieht vor, dass die Spreizzunge und die Ankerzunge in entgegengesetzte Richtungen zeigen, insbesondere die eine nach vorne und die andere nach hinten. Demgemäss kann sich die Biegerichtung der beiden Zungen beim radialen Verdrängen unterscheiden, was eine besonders gute Anpassung des Biegeverhaltens an die Funktion der jeweiligen Zunge ermöglicht. Darüber hinaus erlaubt eine entgegengesetzt zeigende Anordnung der Zungen in konstruktiv besonders einfacher Weise, die Zungen axial zu versetzen und diese mit besonders - in Umfangsrichtung - breiten freien Enden auszustatten, was die Verankerung noch weiter verbessern kann.

Besonders bevorzugt ist es, dass die Spreizzunge nach vorne und die Ankerzunge nach hinten zeigt. Dies kann in besonders einfacher Weise eine besonders gute Anpassung an die unterschiedliche Steilheit der zugeordneten Schrägen ermöglichen.

Vorzugsweise ist die Ankerzunge zumindest bereichsweise in die Spreizzunge eingebettet. Insbesondere kann die Ankerzunge zumindest an zwei Seiten in die Spreizzunge eingebettet sein, insbesondere an eine ihrer Längsseiten und an ihrer Rückseite. Dies kann unter anderem eine besonders kompakte Bauform und eine besonders tiefe Lasteinleitung im Bohrloch ermöglichen. Vorzugsweise ist die Ankerzunge zwischen zwei Spreizzungen angeordnet.

Insbesondere kann vorgesehen werden, dass die Ankerzunge rundum in die Spreizzunge eingebettet ist. Insbesondere kann die Spreizzunge also die Ankerzunge umringen, das heisst die Ankerzunge kann an ihrer Vorderseite, an ihrer Rückseite und an ihren beiden Längsseiten in die Spreizzunge eingebettet sein. Das erlaubt einerseits eine besonders tiefe Lasteinleitung im Bohrloch und andererseits kann das freie Ende der Spreizzunge besonders - in Umfangsrichtung - breit ausgeführt werden, was die Verankerung noch weiter verbessern kann.

Es kann auch vorgesehen werden, dass die Spreizzunge an der vorderen Stirnseite der Spreizhülse angeordnet ist und die Ankerzunge an der hinteren Stirnseite der Spreizhülse oder umgekehrt.

Es kann vorgesehen werden, dass sich die Ankerschräge und die Spreizschräge axial überlappen. Beispielsweise können sowohl die Ankerschräge als auch die Spreizschräge an einem Spreizkörper, insbesondere Spreizkonus, des Ankerbolzens vorgesehen werden. Dies kann unter anderem herstellungstechnische Vorteile haben und für eine besonders konzentrierte Lasteinleitung, insbesondere tief im Bohrloch, sorgen.

Es kann auch vorgesehen werden, dass die Ankerschräge und die Spreizschräge axial versetzt zueinander angeordnet sind. Beispielsweise kann die Spreizschräge an einem Spreizkörper, insbesondere Spreizkonus, des Ankerbolzens vorgesehen werden und die Ankerschräge an einem Halsbereich des Ankerbolzens. Hierdurch können in besonders einfacher Weise besonders - in Umfangsrichtung - breite Schrägen bereitgestellt werden, was im Hinblick auf die Lastwerte vorteilhaft sein kann.

Zweckmässigerweise weist der Ankerbolzen einen Spreizkörper auf, wobei die Spreizschräge am Spreizkörper gebildet ist. Der Spreizkörper kann vorzugsweise einstückig mit dem Rest des Ankerbolzens, insbesondere einstückig mit einer Ankerstange des Ankerbolzens, ausgeführt sein. Grundsätzlich könnte der Spreizkörper auch getrennt von der Ankerstange ausgeführt sein, dann aber zugfest mit der Ankerstange gekoppelt. Insbesondere kann der Spreizkörper als Spreizkonus ausgebildet sein. Ein solcher Spreizkonus kann eine mathematisch exakt konusförmige Oberfläche haben, muss dies aber nicht.

Eine weitere bevorzugte Ausgestaltung der Erfindung liegt darin, dass die Ankerzunge an ihrem freien Ende eine, vorzugsweise radial nach aussen gekrümmte, Kralle bildet. Unter einer solchen Kralle kann insbesondere eine gekrümmte, radial nach aussen vorstehende Struktur verstanden werden. Mittels einer solchen Kralle kann, in herstellungstechnisch besonders einfacher Art und Weise, die äussere Reibung noch weiter erhöht werden und/oder eine nach bessere Verankerung im Bohrloch gewährleistet werden, insbesondere nach Rissöffnung.

Es kann auch vorgesehen werden, dass die Spreizhülse mehrere Spreizzungen aufweist, wobei jeder der Spreizzungen eine am Ankerbolzen angeordnete, nach hinten weisende Spreizschräge zum radialen Verdrängen der jeweiligen Spreizzunge zugeordnet ist. Dies kann im Hinblick auf eine besonders homogene Krafteinleitung in die umgebende Bohrlochwand, auf die Vermeidung von Spannungsspitzen und somit auf besonders gute Lastwerte vorteilhaft sein. Die einzelnen Spreizschrägen können voneinander getrennt sein, beispielsweise durch Mulden im Ankerbolzen, insbesondere durch Mulden mit Ankerschrägen. Die einzelnen Spreizschrägen können aber auch nahtlos ineinander übergehen und eine gemeinsame Spreizschräge bilden.

Zusätzlich oder alternativ kann vorgesehen werden, dass die Ankerhülse mehrere Ankerzungen aufweist, wobei jeder der Ankerzungen eine am Ankerbolzen angeordnete, nach hinten weisende Ankerschräge zum radialen Verdrängen der jeweiligen Ankerzunge zugeordnet ist. Dies kann im Hinblick auf eine besonders homogene Krafteinleitung in die umgebende Bohrlochwand, auf die Vermeidung von Spannungsspitzen und somit auf besonders gute Lastwerte vorteilhaft sein. Die einzelnen Ankerschrägen können insbesondere an Mulden im Ankerbolzen gebildet sein.

Soweit mehrere Spreizzungen und/oder mehrere Spreizschrägen vorgesehen sind, können diese insbesondere so ausgebildet sein, wie es hier im Zusammenhang mit einer Spreizzunge beziehungsweise einer Spreizschräge beschrieben ist. Soweit mehrere Ankerzungen und/oder mehrere Ankerschrägen vorgesehen sind, können diese insbesondere so ausgebildet sein, wie es hier im Zusammenhang mit einer Ankerzunge beziehungsweise einer Ankerschräge beschrieben ist. Insbesondere kann vorgesehen werden, dass die Ankerschrägen zumindest bereichsweise steiler verlaufen als die Spreizschrägen.

Die Erfindung betrifft auch die bestimmungsgemässe Verwendung eines erfindungsgemässen Spreizankers. Insbesondere betrifft die Erfindung die Verwendung eines erfindungsgemässen Spreizankers, bei welcher der Ankerbolzen relativ zur, insbesondere in einem Bohrloch angeordneten, Spreizhülse, verschoben wird, insbesondere nach hinten verschoben wird, und dabei die Spreizzunge von der Spreizschräge radial verdrängt wird und die Ankerzunge von der Ankerschräge radial verdrängt wird.

Merkmale, die im Zusammenhang mit dem erfindungsgemässen Spreizanker erläutert werden, können auch bei der erfindungsgemässen Verwendung zum Einsatz kommen, so wie auch umgekehrt Merkmale, die im Zusammenhang mit der erfindungsgemässen Verwendung erläutert werden, auch beim erfindungsgemässen Spreizanker zum Einsatz kommen können.

Die Erfindung wird nachfolgend anhand bevorzugter Ausführungsbeispiele näher erläutert, die schematisch in den beiliegenden Figuren dargestellt sind. In den Figuren zeigen schematisch:
- Figur 1:: eine Seitenansicht einer ersten Ausführungsform eines erfindungsgemässen Spreizankers;
- Figur 2:: eine Seitenansicht des Ankerbolzens des Spreizankers aus Figur 1 ohne Spreizhülse;
- Figur 3:: eine Seitenansicht der Spreizhülse des Spreizankers aus Figur 1;
- Figur 4:: eine Längsschnittansicht des Spreizankers aus Figur 1;
- Figur 5:: eine Seitenansicht einer zweiten Ausführungsform eines erfindungsgemässen Spreizankers;
- Figur 6:: eine Seitenansicht des Ankerbolzens des Spreizankers aus Figur 5 ohne Spreizhülse;
- Figur 7:: eine Seitenansicht der Spreizhülse des Spreizankers aus Figur 5; und
- Figur 8:: eine Längsschnittansicht des Spreizankers aus Figur 5.

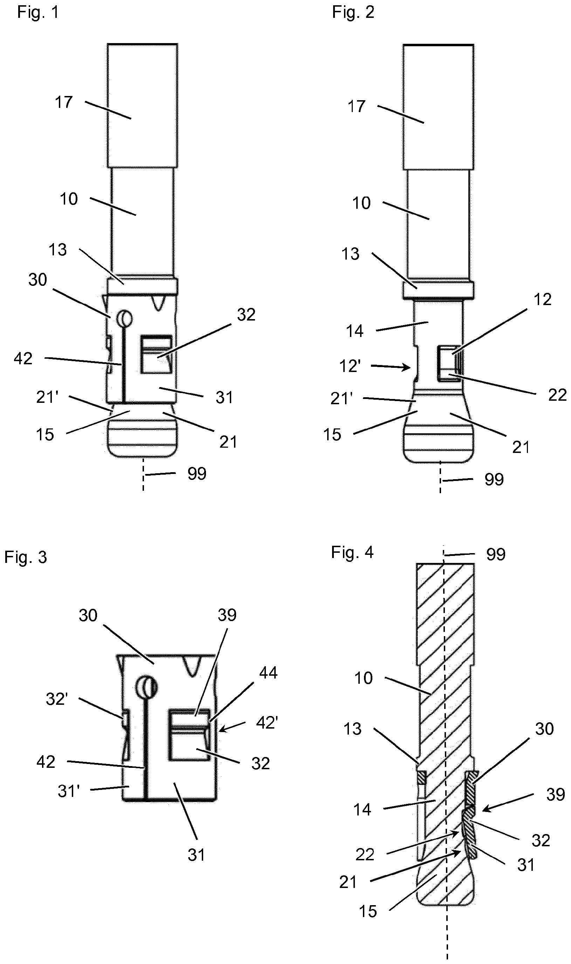

Die Figuren 1 bis 4 zeigen ein erstes Ausführungsbeispiel eines erfindungsgemässen Spreizankers. Der Spreizanker weist einen Ankerbolzen 10 mit einer Längsachse 99 sowie eine Spreizhülse 30 auf, wobei die Spreizhülse 30 den Ankerbolzen 10 ringförmig umgibt. Der Ankerbolzen 10 weist einen Halsbereich 14 mit zumindest annähernd konstantem Querschnitt auf. Im Anschluss an den Halsbereich 14 weist der Ankerbolzen 10 vor dem Halsbereich 14, im vorderen Endbereich des Ankerbolzens 10, einen Spreizkörper 15 für die Spreizhülse 30 auf, der hier beispielhaft integral mit dem Rest des Ankerbolzens 10 ausgeführt ist. Am Spreizkörper 15 weitet sich der Ankerbolzen 10 an seiner Aussenoberfläche ausgehend vom Halsbereich 14 nach vorne hin auf, das heisst der Spreizkörper 15 konvergiert an seiner Aussenseite nach hinten hin. Die Spreizhülse 30 umgibt den Halsbereich 14 des Ankerbolzens 10. Der Spreizkörper 15 ist grösstenteils vor der Spreizhülse 30 angeordnet.

Der Ankerbolzen 10 weist ferner einen beispielsweise als Kreisring ausgebildeten Hülsenanschlag 13 auf, der eine Axialbewegung der Spreizhülse 30 zum rückwärtigen Ende des Ankerbolzens 10 hin, das heisst eine Axialbewegung der Spreizhülse 30 vom Spreizkörper 15 hinweg, begrenzt.

An seinem dem Spreizkörper 15 entgegengesetzten rückwärtigen Endbereich weist der Ankerbolzen 10 eine, hier beispielsweise als Aussengewinde dargestellte, Lastangriffsstruktur 17 zum Einleiten von Zugkräften in den Ankerbolzen 10 auf. Auf diesem Aussengewinde kann eine nicht dargestellte Mutter mit korrespondierendem Innengewinde angeordnet sein.

Wie insbesondere Figur 3 zeigt, weist die Spreizhülse 30 mehrere Schlitze 42, 42` auf, welche sich ausgehend von der vorderen Stirnseite der Spreizhülse 30, die dem Spreizkörper 15 zugewandt ist, axial nach hinten in die Spreizhülse 30 hinein erstrecken. Die Schlitze 42, 42` teilen Spreizzungen 31, 31' der Spreizhülse 30 voneinander ab. Diese Spreizzungen 31, 31' sind jeweils an ihrer Vorderseite und an ihren beiden entgegengesetzten Längsseiten frei und an ihren jeweiligen Rückseiten miteinander verbunden. Die Spreizzungen 31, 31` sind somit vorderseitig frei und zeigen axial nach vorne, zum Spreizkörper 15 hin.

Wie insbesondere Figur 3 weiter zeigt, ist innerhalb der Spreizzunge 31 durch einen U-förmigen Schlitz 44 eine Ankerzunge 32 gebildet. Aufgrund des U-förmigen Schlitzes 44 ist die Ankerzunge 32 an ihrer Rückseite und an ihren beiden entgegengesetzten Längsseiten frei. An ihrer Vorderseite ist die Ankerzunge 32 mit der Spreizzunge 31 verbunden. Die Ankerzunge 32 ist somit rückseitig frei und zeigt nach hinten, vom Spreizkörper 15 weg. Das freie Ende der Ankerzunge 32 ist gegenüber dem freien Enden der Spreizzunge 31 axial nach hinten versetzt

Die Ankerzunge 32 ist im vorliegenden Ausführungsbeispiel rundum in die Spreizzunge 31 eingebettet, das heisst die Ankerzunge 32 ist vorderseitig, rückseitig und längsseitig in die Spreizzunge 31 eingebettet. An ihrem freien Ende, das hier das rückwärtige Ende ist, weist die Ankerzunge 32 eine radial nach aussen weisende Kralle 39 auf, die durch eine Umbiegung des freien Endes der Ankerzunge 32 radial nach aussen hin gebildet ist.

In den anderen Spreizzungen 31` sind ebenfalls Ankerzungen 32` gebildet, welche der Ankerzunge 32 entsprechen.

Im Halsbereich 14 des Ankerbolzens 10 ist eine Mulde 12 gebildet, die sich radial nach innen zur Längsachse 99 des Ankerbolzens 10 erstreckt. In dieser Mulde 12 ist die Ankerzunge 32 teilweise aufgenommen. Am vorderen Ende der Mulde 12 ist eine Ankerschräge 22 für die Ankerzunge 32 gebildet. An dieser Ankerschräge 22 nimmt der Querschnitt des Ankerbolzens 10 nach vorne hin zu. Die Ankerschräge 22 kann die Ankerzunge 32 radial nach aussen drängen, wenn der Ankerbolzen 10 relativ zur Spreizhülse 30 mit der Ankerzunge 32 nach hinten versetzt wird und die Ankerzunge 32 dabei auf die Ankerschräge 22 aufläuft.

Der Ankerbolzen 10 weist darüber hinaus weitere Mulden 12' für die weiteren Ankerzungen 32` auf, welche der Mulde 12 entsprechen.

Am Spreizkörper 15 sind Spreizschrägen 21, 21' für die Spreizzungen 31, 31' gebildet, welche den Spreizzungen 31, 31' axial vorgelagert sind. An diesen Spreizschrägen 21, 21' nimmt der Querschnitt des Ankerbolzens 10 nach vorne hin zu. Die Spreizschrägen 21, 21` können die Spreizzungen 31, 31` radial nach aussen drängen, wenn der Ankerbolzen 10 relativ zur Spreizhülse 30 mit den Spreizzungen 31, 31` nach hinten versetzt wird und die Spreizzungen 31, 31' dabei auf die Spreizschrägen 21, 21' auflaufen. Die Spreizschrägen 21, 21` gehen hier ineinander über und bilden eine gemeinsame, vorzugsweise konusförmige Spreizschräge.

Der axiale Abstand der Spreizzungen 31, 31' von der jeweiligen Spreizschräge 21, 21' ist kleiner als der axiale Abstand der Ankerzungen 32, 32` von der jeweiligen Ankerschräge 22, 22`, so dass, wenn der Ankerbolzen 10 relativ zur Spreizhülse 30 nach hinten versetzt wird, zunächst die Spreizzungen 31, 31` radial nach aussen gedrängt werden und erst im Anschluss die Ankerzungen 32, 32`. Die Ankerschrägen 22, 22` sind steiler zur Längsachse 99 angeordnet als die Spreizschrägen 21, 21', das heisst die Ankerschrägen 22, 22` schliessen mit der Längsachse 99 einen grösseren maximalen spitzen Winkel ein als die Spreizschrägen 21, 21'.

Beim Montieren des Spreizankers wird der Ankerbolzen 10 mit seinem vorderen Ende voran in Richtung der Längsachse 99 des Ankerbolzens 10 in ein Bohrloch geschoben. Aufgrund des Hülsenanschlags 13, der eine Verschiebung der Spreizhülse 30 zum hinteren Ende des Ankerbolzens 10 blockiert, wird dabei auch die Spreizhülse 30 in das Bohrloch eingebracht. Sodann wird der Ankerbolzen 10, beispielsweise durch Anziehen einer Mutter, die auf der als Aussengewinde ausgebildeten Lastangriffsstruktur 17 angeordnet ist, wieder ein Stück weit aus dem Bohrloch herausgezogen. Aufgrund ihrer Reibung mit der Bohrlochwand bleibt die Spreizhülse 30 dabei zurück und es kommt zu einer axialen Verschiebung des Ankerbolzens 10 relativ zur Spreizhülse 30 nach hinten. Im Verlauf dieser Verschiebung laufen zunächst die Spreizzungen 31, 31' auf ihre Spreizschrägen 21, 21' auf und werden von diesen radial gegen die Bohrlochwand nach aussen gedrängt. Bei fortschreitender axialer Verschiebung des Ankerbolzens 10 relativ zur Spreizhülse 30 nach hinten laufen auch die Ankerzungen 32, 32` auf ihre Ankerschrägen 22, 22` auf und werden von diesen radial gegen die Bohrlochwand nach aussen gedrängt. Durch diesen Mechanismus wird der Spreizanker im Substrat fixiert.

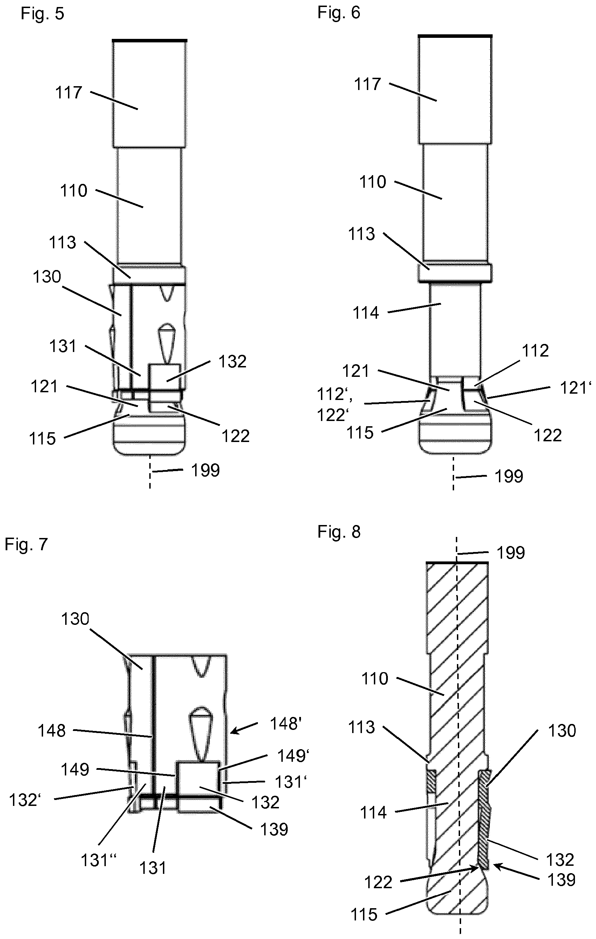

Die Figuren 5 bis 8 zeigen ein zweites Ausführungsbeispiel eines erfindungsgemässen Spreizankers. Der Spreizanker weist einen Ankerbolzen 110 mit einer Längsachse 199 sowie eine Spreizhülse 130 auf, wobei die Spreizhülse 130 den Ankerbolzen 110 ringförmig umgibt. Der Ankerbolzen 110 weist einen Halsbereich 114 mit zumindest annähernd konstantem Querschnitt auf. Im Anschluss an den Halsbereich 114 weist der Ankerbolzen 110 vor dem Halsbereich 114, im vorderen Endbereich des Ankerbolzens 110, einen Spreizkörper 115 für die Spreizhülse 130 auf, der hier beispielhaft integral mit dem Rest des Ankerbolzens 110 ausgeführt ist. Am Spreizkörper 115 weitet sich der Ankerbolzen 110 an seiner Aussenoberfläche ausgehend vom Halsbereich 114 nach vorne hin auf, das heisst der Spreizkörper 115 konvergiert an seiner Aussenseite nach hinten hin. Die Spreizhülse 130 umgibt den Halsbereich 114 des Ankerbolzens 110. Der Spreizkörper 115 ist grösstenteils vor der Spreizhülse 130 angeordnet.

Der Ankerbolzen 110 weist ferner einen beispielsweise als Kreisring ausgebildeten Hülsenanschlag 113 auf, der eine Axialbewegung der Spreizhülse 130 zum rückwärtigen Ende des Ankerbolzens 110 hin, das heisst eine Axialbewegung der Spreizhülse 130 vom Spreizkörper 115 hinweg, begrenzt.

An seinem dem Spreizkörper 115 entgegengesetzten rückwärtigen Endbereich weist der Ankerbolzen 110 eine, hier beispielsweise als Aussengewinde dargestellte, Lastangriffsstruktur 117 zum Einleiten von Zugkräften in den Ankerbolzen 110 auf. Auf diesem Aussengewinde kann eine nicht dargestellte Mutter mit korrespondierendem Innengewinde angeordnet sein.

Wie insbesondere Figur 7 zeigt, weist die Spreizhülse 130 mehrere lange Schlitze 148, 148` sowie mehrere kurze Schlitze 149, 149` auf. Sowohl die kurzen Schlitze 149, 149` als auch die langen Schlitze 148, 148` erstrecken sich ausgehend von der vorderen Stirnseite der Spreizhülse 130, die dem Spreizkörper 115 zugewandt ist, axial nach hinten in die Spreizhülse 130 hinein, die langen Schlitze 148, 148` dabei weiter nach hinten als die kurzen Schlitze 149, 149`.

In Umfangsrichtung um die Längsachse 199 folgen auf einen langen Schlitz 148 zwei benachbarte kurze Schlitze 149, 149`, hierauf wieder ein langer Schlitz 148`, hierauf wieder zwei benachbarte kurze Schlitze, und so weiter. Insbesondere können die langen Schlitze 148, 148` und die kurzen Schlitze 149, 149` parallel zueinander verlaufen.

Wie insbesondere Figur 7 weiter zeigt, weist die Spreizhülse 130 Spreizzungen 131, 131', 131" und Ankerzungen 132, 132` auf, die vorderseitig an der Spreizhülse 130 angeordnet sind. Sowohl die Spreizzungen 131, 131', 131" als auch die Ankerzungen 132, 132` zeigen axial nach vorne. Die freien Enden der Spreizzungen 131, 131', 131" und die freien Enden der Ankerzungen 132, 132` bilden die vordere Stirnseite der Spreizhülse 130. Im vorliegenden Ausführungsbeispiel stehen die Ankerzungen 132, 132` ein Stück weit weiter nach vorne hin vor als die Spreizzungen 131, 131', 131". Aber auch eine bündige Anordnung oder eine Anordnung, bei der die Spreizzungen 131, 131', 131" weiter nach vorne vorstehen als die Ankerzungen 132, 132`, ist möglich.

Die Ankerzungen 132, 132` werden jeweils von zwei benachbarten kurzen Schlitzen 149, 149` gebildet und begrenzt. Die Spreizzungen 131, 131', 131" werden jeweils von einem langen Schlitz 148, 148` und einem dem langen Schlitz 148, 148` benachbarten kurzen Schlitz 149, 149` gebildet und begrenzt.

Die Spreizhülse 130 weist U-förmige Strukturen auf, deren Schenkel jeweils durch zwei Spreizzungen 131, 131', 131" gebildet werden, wobei in jede der U-förmigen Strukturen - zwischen den beiden die Schenkel bildenden Spreizzungen - eine Ankerzunge 132, 132` eingebettet ist.

Die Spreizzungen 131, 131' und die Ankerzungen 132, 132` sind an ihrer jeweiligen Vorderseite und an ihren jeweiligen Längsseiten frei und an ihren jeweiligen Rückseiten miteinander verbunden.

An ihren freien, also vorderen Enden weisen die Ankerzungen 132, 132` jeweils eine radial nach aussen weisende Kralle 139 auf, die durch eine Umbiegung des freien Endes der jeweiligen Ankerzunge 132, 132` radial nach aussen hin gebildet ist.

Am Spreizkörper 115 sind Spreizschrägen 121, 121' für die Spreizzungen 131, 131' gebildet, welche den Spreizzungen 131, 131` axial vorgelagert sind. An diesen Spreizschrägen 121 nimmt der Querschnitt des Ankerbolzens 110 nach vorne hin zu. Die Spreizschrägen 121, 121' können die Spreizzungen 131, 131' radial nach aussen drängen, wenn der Ankerbolzen 110 relativ zur Spreizhülse 130 mit den Spreizzungen 131, 131' nach hinten versetzt wird und die Spreizzungen 131, 131' dabei auf die Spreizschrägen 121, 121' auflaufen. Die Spreizschrägen 121, 121' bilden hier Abschnitte eines Kegelmantels.

Im Spreizkörper 115 des Ankerbolzens 110 sind Mulden 112, 112` gebildet, die sich radial nach innen zur Längsachse 199 des Ankerbolzens 110 erstreckt. In diesen Mulden 112, 112` ist jeweils eine Ankerzunge 132, 132` teilweise aufgenommen. An den vorderen Enden der Mulden 112, 112` ist jeweils eine Ankerschräge 122, 122' für die in der jeweiligen Mulde 112, 112` aufgenommene Ankerzunge 132, 132` gebildet. An diesen Ankerschrägen 122, 122' nimmt der Querschnitt des Ankerbolzens 110 nach vorne hin zu. Die Ankerschrägen 122, 122' können die in der zugeordneten Mulde 112, 112` angeordnete Ankerzunge 132, 132` radial nach aussen drängen, wenn der Ankerbolzen 110 relativ zur Spreizhülse 130 mit den Ankerzungen 132, 132` nach hinten versetzt wird und die Ankerzungen 132, 132` dabei auf die Ankerschrägen 122, 122' auflaufen.

Die Ankerschrägen 122, 122' sind steiler zur Längsachse 199 angeordnet als die Spreizschrägen 121, 121', das heisst die Ankerschrägen 122, 122' schliessen mit der Längsachse 199 des Ankerbolzens 110 einen grösseren maximalen spitzen Winkel ein als die Spreizschrägen 121, 121'.

Beim Montieren des Spreizankers wird der Ankerbolzen 110 mit seinem vorderen Ende voran in Richtung der Längsachse 199 des Ankerbolzens 110 in ein Bohrloch geschoben. Aufgrund des Hülsenanschlags 113, der eine Verschiebung der Spreizhülse 130 zum hinteren Ende des Ankerbolzens 110 blockiert, wird dabei auch die Spreizhülse 130 in das Bohrloch eingebracht. Sodann wird der Ankerbolzen 110, beispielsweise durch Anziehen einer Mutter, die auf der als Aussengewinde ausgebildeten Lastangriffsstruktur 117 angeordnet ist, wieder ein Stück weit aus dem Bohrloch herausgezogen. Aufgrund ihrer Reibung mit der Bohrlochwand bleibt die Spreizhülse 130 dabei zurück und es kommt zu einer axialen Verschiebung des Ankerbolzens 110 relativ zur Spreizhülse 130 nach hinten. Im Verlauf dieser Verschiebung laufen die Spreizzungen 131, 131' auf ihre Spreizschrägen 121, 121' auf und werden von diesen radial gegen die Bohrlochwand nach aussen gedrängt, und die Ankerzungen 132, 132` laufen auf ihre Ankerschrägen 122,122` auf und werden von diesen radial gegen die Bohrlochwand nach aussen gedrängt. Durch diesen Mechanismus wird der Spreizanker im Substrat fixiert.

## Patentansprüche

1. Spreizanker mit einem Ankerbolzen (10; 110) und einer Spreizhülse (30; 130), welche den Ankerbolzen (10; 110) umgibt,
wobei die Spreizhülse (30; 130) eine Spreizzunge (31; 131) und eine Ankerzunge (32; 132) aufweist, und wobei der Ankerbolzen (10; 110) eine nach hinten weisende Spreizschräge (21; 121) zum radialen Verdrängen der Spreizzunge (31; 131) und eine nach hinten weisende Ankerschräge (22; 122) zum radialen Verdrängen der Ankerzunge (32; 132) aufweist,
wobei
die Ankerschräge (22; 122) zumindest bereichsweise steiler verläuft als die Spreizschräge (21; 121), wobei
bei axialer Verschiebung der Spreizzunge (31; 131) zur Spreizschräge (21; 121) hin die Spreizzunge (31; 131) auf die Spreizschräge (21; 121) aufläuft bevor die Ankerzunge (32; 132) auf die Ankerschräge (22; 122) aufläuft, **dadurch gekennzeichnet dass** die Ankerschräge (22; 122) an einer im Ankerbolzen (10; 110) angeordneten Mulde (12; 112) gebildet ist.

2. Spreizanker nach Anspruch 1,
**dadurch gekennzeichnet,**
**dass** die Ankerschräge (22; 122) das freie Ende der Ankerzunge (32; 132), in Umfangsrichtung des Ankerbolzens (10; 110) betrachtet, komplett abdeckt.

3. Spreizanker nach einem der vorstehenden Ansprüche,
**dadurch gekennzeichnet,**
**dass** sowohl die Spreizzunge (31; 131) als auch die Ankerzunge (32; 132) nach vorne zeigen.

4. Spreizanker nach Anspruch 3,
**dadurch gekennzeichnet,**
**dass** sowohl die Spreizzunge (31; 131) als auch die Ankerzunge (32; 132) vorne an der Spreizhülse (30; 130) vorstehen.

5. Spreizanker nach Anspruch 4,
**dadurch gekennzeichnet,**
**dass** die Spreizzunge (31; 131) und die Ankerzunge (32; 132) unterschiedlich weit nach vorne vorstehen.

6. Spreizanker nach einem der Ansprüche 1 oder 2,
**dadurch gekennzeichnet,**
**dass** die Spreizzunge (31; 131) und die Ankerzunge (32; 132) in entgegengesetzte Richtungen zeigen.

7. Spreizanker nach Anspruch 6,
**dadurch gekennzeichnet,**
**dass** die Spreizzunge (31; 131) nach vorne und die Ankerzunge (32; 132) nach hinten zeigt.

8. Spreizanker nach einem der vorstehenden Ansprüche,
**dadurch gekennzeichnet,**
**dass** die Ankerzunge (32; 132) rundum in die Spreizzunge (31; 131) eingebettet ist.

9. Spreizanker nach einem der vorstehenden Ansprüche,
**dadurch gekennzeichnet,**
**dass** sich die Ankerschräge (22; 122) und die Spreizschräge (21; 121) axial überlappen.

10. Spreizanker nach einem der Ansprüche 1 bis 8,
**dadurch gekennzeichnet,**
**dass** die Ankerschräge (22; 122) und die Spreizschräge (21; 121) axial versetzt zueinander angeordnet sind.

11. Spreizanker nach einem der vorstehenden Ansprüche,
**dadurch gekennzeichnet,**
**dass** der Ankerbolzen (10; 110) einen Spreizkörper (15; 115) aufweist, und dass die Spreizschräge (21; 121) am Spreizkörper (15; 115) gebildet ist.

12. Spreizanker nach einem der vorstehenden Ansprüche,
**dadurch gekennzeichnet,**
**dass** die Ankerzunge (32; 132) an ihrem freien Ende eine Kralle (39; 139) bildet.

13. Spreizanker nach einem der vorstehenden Ansprüche,
**dadurch gekennzeichnet,**
- **dass** die Spreizhülse (30; 130) mehrere Spreizzungen (31, 31'; 131, 131', 131") aufweist, wobei jeder der Spreizzungen (31, 31'; 131, 131', 131") eine am Ankerbolzen (10; 110) angeordnete, nach hinten weisende Spreizschräge (21, 21`; 121, 121') zum radialen Verdrängen der jeweiligen Spreizzunge (31, 31') zugeordnet ist, und
- **dass** die Spreizhülse (30) mehrere Ankerzungen (32, 32`) aufweist, wobei jeder der Ankerzungen (32, 32'; 132, 132') eine am Ankerbolzen (10) angeordnete, nach hinten weisende Ankerschräge (22, 22'; 122, 122') zum radialen Verdrängen der jeweiligen Ankerzunge (32, 32'; 132, 132') zugeordnet ist.

14. Verwendung eines Spreizankers nach einem der vorstehenden Ansprüche, bei welcher der Ankerbolzen (10; 110) relativ zur Spreizhülse (30; 130) verschoben wird und dabei die Spreizzunge (31; 131) von der Spreizschräge (21; 121) radial verdrängt wird und die Ankerzunge (32; 132) von der Ankerschräge (22; 122) radial verdrängt wird.

## Claims

1. Expansion anchor comprising an anchor bolt (10; 110) and an expansion sleeve (30; 130) surrounding the anchor bolt (10; 110),
wherein the expansion sleeve (30; 130) has an expansion tongue (31; 131) and an anchor tongue (32; 132), and wherein the anchor bolt (10; 110) has a rearward facing expansion bevel (21; 121) for radially displacing the expansion tongue (31; 131) and a rearward facing anchor bevel (22; 122) for radially displacing the anchor tongue (32; 132),
wherein
the anchor bevel (22; 122) extends at least in regions more steeply than the expansion bevel (21; 121), wherein
in the case of axial displacement of the expansion tongue (31; 131) toward the expansion bevel (21; 121), the expansion tongue (31; 131) runs onto the expansion bevel (21; 121) before the anchor tongue (32; 132) runs onto the anchor bevel (22; 122), **characterized in that** the anchor bevel (22; 122) is formed on a depression (12; 112) arranged in the anchor bolt (10; 110).

2. Expansion anchor according to claim 1,
**characterized in that,**
the anchor bevel (22; 122) completely covers the free end of the anchor tongue (32; 132) viewed in the circumferential direction of the anchor bolt (10; 110).

3. Expansion anchor according to either of the preceding claims,
**characterized in that,**
both the expansion tongue (31; 131) and the anchor tongue (32; 132) point forward.

4. Expansion anchor according to claim 3,
**characterized in that,**
both the expansion tongue (31; 131) and the anchor tongue (32; 132) project at the front on the expansion sleeve (30; 130).

5. Expansion anchor according to claim 4,
**characterized in that,**
the expansion tongue (31; 131) and the anchor tongue (32; 132) project forward to different extents.

6. Expansion anchor according to either claim 1 or claim 2,
**characterized in that,**
the expansion tongue (31; 131) and the anchor tongue (32; 132) point in opposite directions.

7. Expansion anchor according to claim 6,
**characterized in that,**
the expansion tongue (31; 131) points forward and the anchor tongue (32; 132) points backward.

8. Expansion anchor according to any of the preceding claims,
**characterized in that,**
the anchor tongue (32; 132) is circumferentially embedded in the expansion tongue (31; 131).

9. Expansion anchor according to any of the preceding claims,
**characterized in that,**
the anchor bevel (22; 122) and the expansion bevel (21; 121) overlap axially.

10. Expansion anchor according to any of claims 1 to 8,
**characterized in that,**
the anchor bevel (22; 122) and the expansion bevel (21; 121) are arranged so as to be axially offset from each other.

11. Expansion anchor according to any of the preceding claims,
**characterized in that,**
the anchor bolt (10; 110) has an expansion body (15; 115), and **in that** the expansion bevel (21; 121) is formed on the expansion body (15; 115).

12. Expansion anchor according to any of the preceding claims,
**characterized in that,**
the anchor tongue (32; 132) forms a claw (39; 139) at its free end.

13. Expansion anchor according to any of the preceding claims,
**characterized in that,**
- the expansion sleeve (30; 130) has a plurality of expansion tongues (31, 31'; 131, 131', 131"), each of the expansion tongues (31, 31'; 131, 131', 131") being assigned a rearward facing expansion bevel (21, 21'; 121, 121') arranged on the anchor bolt (10; 110) for radially displacing the relevant expansion tongue (31, 31'), and
- the expansion sleeve (30) has a plurality of anchor tongues (32, 32'), each of the anchor tongues (32, 32'; 132, 132') being associated with a rearward facing anchor bevel (22, 22'; 122, 122') arranged on the anchor bolt (10) for radially displacing the relevant anchor tongue (32, 32'; 132, 132').

14. Use of an expansion anchor according to any of the preceding claims, in which the anchor bolt (10; 110) is displaced relative to the expansion sleeve (30; 130) and in the process the expansion tongue (31; 131) is displaced radially by the expansion bevel (21; 121) and the anchor tongue (32; 132) is displaced radially by the anchor bevel (22; 122).

## Revendications

1. Élément d'ancrage à expansion comportant un boulon d'ancrage (10; 110) et une douille à expansion (30; 130), laquelle entoure le boulon d'ancrage (10; 110),
dans lequel la douille à expansion (30; 130) présente une languette à expansion (31; 131) et une languette d'ancrage (32; 132), et dans lequel le boulon d'ancrage (10; 110) présente un chanfrein à expansion (21; 121) orienté vers l'arrière pour le déplacement radial de la languette à expansion (31; 131) et un chanfrein d'ancrage (22; 122) orienté vers l'arrière pour le déplacement radial de la languette d'ancrage (32; 132),
dans lequel
le chanfrein d'ancrage (22; 122) s'étend de manière plus raide que le chanfrein à expansion (21; 121), au moins dans certaines régions, dans lequel
lors du déplacement axial de la languette à expansion (31; 131) vers le chanfrein à expansion (21; 121), la languette à expansion (31; 131) s'étend sur le chanfrein à expansion (21; 121) avant que la languette d'ancrage (32; 132) ne s'étende sur le chanfrein d'ancrage (22; 122), **caractérisé en ce que** le chanfrein d'ancrage (22; 122) est formé au niveau d'un creux (12; 112) disposé dans le boulon d'ancrage (10; 110).

2. Élément d'ancrage à expansion selon la revendication 1,
**caractérisé en ce**
**que** le chanfrein d'ancrage (22; 122) recouvre complètement l'extrémité libre de la languette d'ancrage (32; 132), vue dans la direction circonférentielle du boulon d'ancrage (10; 110).

3. Élément d'ancrage à expansion selon l'une des revendications précédentes,
**caractérisé en ce**
**que** la languette à expansion (31; 131) ainsi que la languette d'ancrage (32; 132) sont dirigées vers l'avant.

4. Élément d'ancrage à expansion selon la revendication 3,
**caractérisé en ce**
**que** la languette à expansion (31; 131) ainsi que la languette d'ancrage (32; 132) font saillie à l'avant de la douille à expansion (30; 130).

5. Élément d'ancrage à expansion selon la revendication 4,
**caractérisé en ce**
**que** la languette à expansion (31; 131) et la languette d'ancrage (32; 132) font saillie vers l'avant à des distances différentes.

6. Élément d'ancrage à expansion selon l'une des revendications 1 ou 2,
**caractérisé en ce**
**que** la languette à expansion (31; 131) et la languette d'ancrage (32; 132) sont dirigées dans des directions opposées.

7. Élément d'ancrage à expansion selon la revendication 6,
**caractérisé en ce**
**que** la languette à expansion (31; 131) est dirigée vers l'avant et la languette d'ancrage (32; 132) est dirigée vers l'arrière.

8. Élément d'ancrage à expansion selon l'une des revendications précédentes,
**caractérisé en ce**
**que** la languette d'ancrage (32; 132) est encastrée totalement dans la languette à expansion (31; 131).

9. Élément d'ancrage à expansion selon l'une des revendications précédentes,
**caractérisé en ce**
**que** le chanfrein d'ancrage (22; 122) et le chanfrein à expansion (21; 121) se chevauchent axialement.

10. Élément d'ancrage à expansion selon l'une des revendications 1 à 8,
**caractérisé en ce**
**que** le chanfrein d'ancrage (22; 122) et le chanfrein à expansion (21; 121) sont décalés axialement l'un par rapport à l'autre.

11. Élément d'ancrage à expansion selon l'une des revendications précédentes,
**caractérisé en ce**
**que** le boulon d'ancrage (10; 110) présente un corps à expansion (15; 115) **et en ce que** le chanfrein à expansion (21; 121) est formé sur le corps à expansion (15; 115).

12. Élément d'ancrage à expansion selon l'une des revendications précédentes,
**caractérisé en ce**
**que** la languette d'ancrage (32; 132) forme une griffe (39; 139) au niveau de son extrémité libre.

13. Élément d'ancrage à expansion selon l'une des revendications précédentes, **caractérisé en ce**
- **que** la douille à expansion (30; 130) présente plusieurs languettes à expansion (31, 31'; 131, 131', 131"), dans lequel un chanfrein à expansion (21, 21'; 121, 121') dirigé vers l'arrière et disposé au niveau du boulon d'ancrage (10; 110) est associé à chacune des languettes à expansion (31, 31'; 131, 131', 131") pour le déplacement radial de la languette à expansion (31, 31') respective, et
- **que** la douille à expansion (30) présente plusieurs languettes d'ancrage (32, 32'), dans lequel un chanfrein d'ancrage (22, 22'; 122, 122') dirigé vers l'arrière et disposé au niveau du boulon d'ancrage (10) est associé à chacune des languettes d'ancrage (32, 32'; 132, 132') pour le déplacement radial de la languette d'ancrage (32, 32'; 132, 132') respective.

14. Utilisation d'un élément d'ancrage à expansion selon l'une des revendications précédentes, dans laquelle le boulon d'ancrage (10; 110) est déplacé par rapport à la douille à expansion (30; 130) et ainsi, la languette à expansion (31; 131) est déplacée radialement par le chanfrein à expansion (21; 121) et la languette d'ancrage (32; 132) est déplacée radialement par le chanfrein d'ancrage (22; 122).
